Europäisches Patentamt

European Patent Office

Office européen des brevets

(19)

(11) Numéro de publication : **0 097 753**
**B1**

(12) **FASCICULE DE BREVET EUROPÉEN**

(45) Date de publication du fascicule du brevet :
01.10.86

(51) Int. Cl.⁴ : **H 04 L 11/08, H 04 Q 1/448**

(21) Numéro de dépôt : 82430016.4

(22) Date de dépôt : 25.06.82

(54) Dispositif récepteur de tonalité pour système de transmission de données numériques.

(43) Date de publication de la demande :
**11.01.84 Bulletin 84/02**

(45) Mention de la délivrance du brevet :
**01.10.86 Bulletin 86/40**

(84) Etats contractants désignés :
**AT BE DE FR GB IT**

(56) Documents cités :
**EP-A- 0 018 517
FR-A- 2 424 669
ICASSP 80 PROCEEDINGS-IEEE INTERNATIONAL
CONFERENCE ON ACOUSTICS, SPEECH & SIGNAL
PROCESSING, 9-11 avril 1980, Denver, Colorado, vol.
2 of 3, pages 386-389, New York, (USA), TAKAO
NISHITANI et al.: "LSI signal processor development
for communications equipment"
COMMUTATION & ELECTRONIQUE, no. 59, octobre
1977, pages 99-115, Issy les Moulinaux (FR), H.
CAMPAGNO et al.: "Système E10. L'équipment de
tonalités et auxilaires"**

(73) Titulaire : **International Business Machines Corporation
Old Orchard Road
Armonk, N.Y. 10504 (US)
BE DE GB IT AT
Compagnie IBM FRANCE
5 Place Vendôme
F-75000 Paris 1er (FR)
FR**

(72) Inventeur : **Godard, Dominique
Chemin du Moulin Opio
F-06650 Le Rouret (FR)**

(74) Mandataire : **Tubiana, Max
Compagnie IBM France Département de Propriété
Industrielle
F-06610 La Gaude (FR)**

Jouve, 18, rue St-Denis, 75001 Paris, France

EP 0 097 753 B1

# 0 097 753

**Description**

La présente invention selon la revendication 1 a pour objet un détecteur de tonalité et plus précisément un détecteur permettant de déceler la présence d'un signal de fréquence donnée reçu en même temps qu'un signal véhiculant des données numériques.

Dans un réseau de communications de données numériques qu'il soit du type point à point ou multipoint, des dispositifs modulateurs-démodulateurs (modem) servent d'interfaces entre les équipements terminaux (DTE) et le canal de transmission. Ces modems sont utilisés pour transformer les données à transmettre en un signal dont les caractéristiques sont compatibles avec la bande passante du canal de transmission. Compte tenu du coût dudit canal, on concentre généralement les données de plusieurs terminaux sur un même canal à travers un même modem et l'on connecte souvent plusieurs modems à un même canal de transmission. Le réseau de communications ainsi réalisé est alors relativement complexe, d'où l'intérêt de minimiser autant que possible la durée des arrêts de trafic pour cause de panne.

L'un des premiers objectifs en cas de panne est de localiser de manière aussi précise que possible l'élément du réseau à incriminer. De nombreuses solutions à ce problème ont été proposées. Selon l'une d'elles, chaque modem est équipé d'un dispositif qui, en cas de panne dudit modem ou de l'un des éléments qu'il dessert engendre un signal de fréquence (tonalité) donnée dit signal d'alarme et le transmet à l'un des modems du réseau (dit modem principal) où il doit être détecté et identifié. La fréquence du signal d'alarme est choisie légèrement en dehors du spectre du signal de données émis par le modem.

A première vue, la détection et l'identification du signal d'alarme par le modem principal ne devrait pas poser de problème. En effet, on pourrait croire qu'il suffirait de filtrer le signal reçu à l'aide d'un filtre de bande très étroite, centré sur la fréquence du signal d'alarme et de mesurer l'énergie du signal filtré. Mais, mis à part le coût d'un tel filtre, cette solution est inefficace car une mesure absolue d'énergie n'a aucun sens tandis qu'une mesure relative est inefficace puisque le niveau relatif du signal d'alarme par rapport aux données est en pratique essentiellement variable. Ceci pourrait entraîner de fausses détections du signal d'alarme. Ceci est grave car, les détections d'alarme sont utilisées pour entraîner la mise du réseau en mode dit de test, paralysant, dans une certaine mesure, le trafic normal. Il est donc indispensable d'éviter les fausses détections d'alarme.

On a proposé alors de faire passer le signal dans un limiteur avant de le filtrer et de mesurer l'énergie en sortie du filtre. Cette solution permet de minimiser les effets d'un bruit aléatoire (bruit de ligne normal). Elle est malheureusement inefficace dans un réseau dans lequel des données numériques sont transmises en même temps que le signal d'alarme et où ledit signal d'alarme peut être reçu avec un niveau inférieur à celui des données.

Le modem en panne peut en effet être en un point quelconque du réseau, autrement dit être plus ou moins proche du modem principal. Il en résulte que le niveau relatif du signal d'alarme à détecter est essentiellement variable. Le récepteur du modem principal doit donc être capable de détecter un signal dont le niveau peut aller de la saturation à —30 db par rapport aux données.

La présente invention a donc pour objet un récepteur permettant de détecter la présence d'un signal dit d'alarme au sein d'un signal véhiculant des informations ou données à caractère numérique pour un rapport signal d'alarme sur signal de données extrêmement variable.

D'autres objets, caractéristiques et avantages ressortiront de la description qui suit se référant aux dessins annexés représentant un mode de réalisation de l'invention.

## Brève Description des Dessins

Figure 1   configuration d'un système de communications.
Figure 2   récepteur de tonalité utilisant des éléments de l'art antérieur.
Figure 3   récepteur de tonalité selon l'invention.

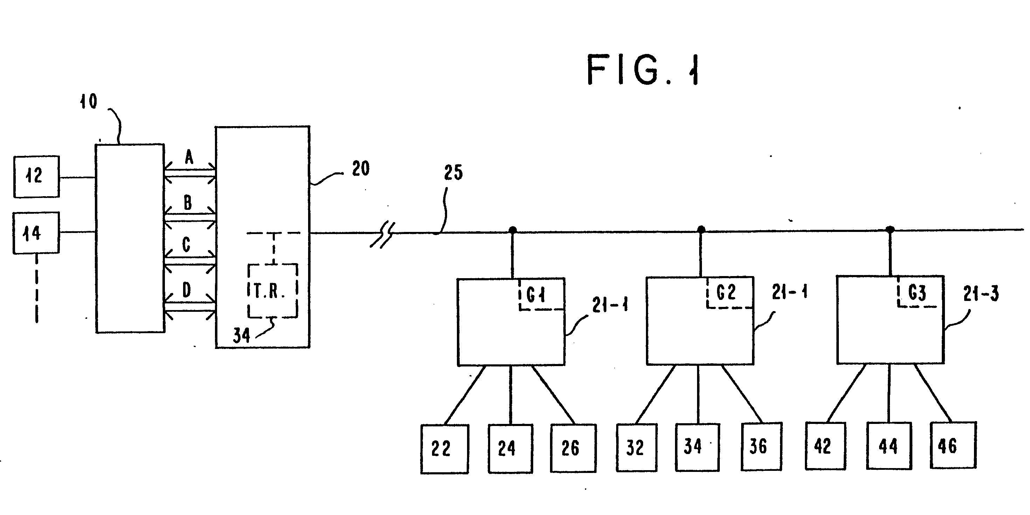

La figure 1 montre la configuration générale d'un système de communications multiplex. Une unité centrale 10 est chargée de gérer les communications entre des terminaux (DTE) 12, 14, etc., et d'autres terminaux 22, 24, 26, 32, etc. Le système central 10 qui peut être par exemple un contrôleur de communications IBM 37305, lui-même assimilable à un DTE, est relié à un modem principal multicanaux 20 au travers de canaux A, B, C, D. Le modem 20 est relié par un canal de transmission 25 à des modems tributaires 21-1, 21-2, 21-3 desservant les terminaux 22, 24, 26, 32, etc.

Les modems qui peuvent être du type IBM 3863, 3864 ou 3865, ont pour rôle, à l'émission, de convertir les données numériques fournies par, les terminaux, en une onde analogique (dit signal de données) dont les caractéristiques en fréquences sont compatibles avec la bande passante du canal de transmission. Dans la suite de la description, on assimilera cette onde aux données.

Pour ce faire, les bits à transmettre fournis par les terminaux desservis par un même modem sont tout d'abord groupés par multiplexage dans le temps selon un ordre pré-établi. Les trains de bits ainsi groupés sont convertis en séquences de symboles de données. Ces symboles sont transmis l'un après l'autre à des

2

instants régulièrement espacés d'un temps T, appelés instants de signalisation. La transmission se fait par modulation de porteuse(s). Cette modulation consiste à faire correspondre à chaque symbole une valeur discrète de l'une ou plusieurs caractéristiques (amplitude, phase) de l'onde porteuse. Les techniques de modulation utilisées ici sont de la famille dite DSB-QC (modulations à doubles bandes latérales porteuses en quadrature). Le terme DSB-QC est utilisé ici au sens large incluant tous les systèmes dans lesquels le signal transmis peut être représenté par la superposition de deux porteuses en quadrature modulées en amplitude.

Les techniques DSB-QC incluent notamment la modulation par sauts de phase, la modulation par sauts de phase et d'amplitude combinés, et la modulation en quadrature.

Les signaux véhiculant l'information de données numériques circulant sur la voie de transmission sont donc sous forme analogique, et occupent une bande de fréquences relativement bien définie.

Lorsqu'un terminal ou un modem est en panne, il est bon que l'unité centrale 10 en soit avisée pour prévenir l'opérateur. On a donc équipé les modems tributaires 21-1, 21-2 et 21-3 d'un générateur G1 à G3 qui engendre un signal d'alarme de fréquence pure comprise entre 300 et 350 Hz donc en principe en dehors de la bande passante des modems. La fréquence 325 Hz est un bon compromis permettant de minimiser les interférences avec les harmoniques des fréquences du secteur à 50 ou 60 Hz. Ainsi, supposons que le modem 21-1 veuille signaler une panne. Il engendre un signal d'alarme à 325 Hz qu'il transmet au modem principal 20 qui doit reconnaître ce signal et en aviser l'unité centrale 10. En régime normal les modems tributaires 21-1 à 21-3 n'émettent que sur sollicitation du système central donc du modem 20. Mais pour ce qui est du signal d'alarme il peut être transmis par l'un des générateurs G1 à G3 à un instant quelconque et notamment pendant que l'un des autres modems du groupe 21-1 à 21-3 transmet des données.

A la réception du signal d'alarme identifié par le récepteur 34 (TR), le modem 20 lance une procédure de test particulièrement lourde destinée à préciser les causes de la panne avant d'alerter l'opérateur. Cette procédure de test paralyse au moins en partie le trafic de signaux de données numériques entre les modems 20 et 21-1 à 21-3. Il est donc particulièrement utile d'éviter une fausse détection de signal d'alarme. En outre, dans certaines circonstances, par exemple en cas de panne du secteur alimentant l'un des modems 21-1 à 21-3, le générateur de signal d'alarme utilise une source d'énergie de secours ne permettant l'envoi de l'alarme que durant un temps relativement court. Le récepteur du modem 20 doit donc réagir très vite.

Un système du type ci-dessus a été décrit par S. Huon et R. Smith dans l'IBM Journal of Research & Development, Vol. 25, N°. 1, janvier 1981, sous le titre : « Network Problem — Determination Aids in Microprocessor-Based Modems ».

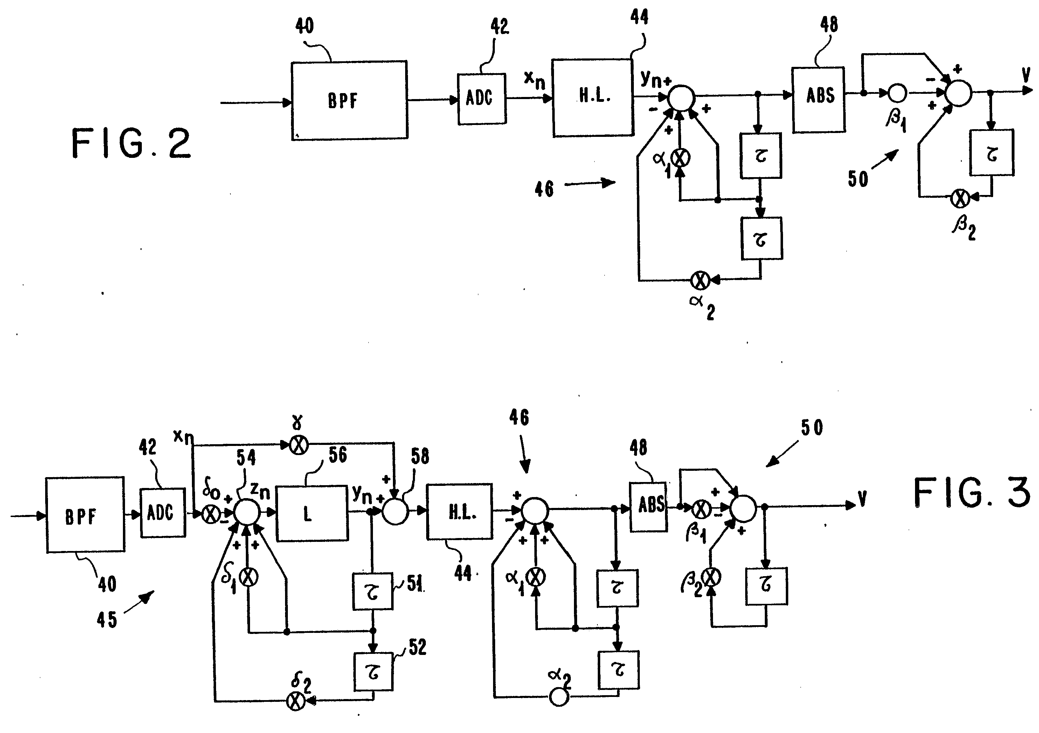

En dehors des périodes où le modem 20 reçoit des données, le signal d'alarme peut être détecté en réalisant le récepteur de tonalité 34 selon le schéma de la figure 2 utilisant le limiteur tel que mentionné plus haut.

Dans ce cas, le signal reçu à l'entrée du récepteur de tonalité passe tout d'abord dans un filtre analogique 40 chargé d'éliminer une partie du bruit de ligne. Le signal sortant du filtre 40 est échantillonné à 4 800 échantillons par seconde dans un convertisseur analogique-numérique 42 (A/D). Soit $X_n$ l'échantillon de signal reçu au $n^{ième}$ instant d'échantillonnage du signal. Après avoir été traduits en numérique dans le convertisseur 42, les échantillons $\{X_n\}$ sont soumis à un dispositif limiteur d'amplitude ou écrêteur 44 (H.L) qui, en réponse, fournit un signal $y_n$ tel que :

$$\begin{cases} y_n = \phantom{-}A & \text{si} & x_n \geqslant 0 \\ y_n = -A & \text{si} & x_n < 0 \end{cases} \tag{1}$$

Les échantillons $\{y_n\}$ sont introduits dans un filtre récursif du second ordre 46 dont la fonction de transfert en z obéit à la relation :

$$G(z) = \frac{1}{1 - 2\mu \cos 2\pi f_0 \tau \, z^{-1} + \mu^2 \, z^{-2}} \tag{2}$$

où $f_0$ = 325 Hz
et $\tau$ = 1/4 800 seconde.

La bande passante du filtre 46 est liée à la valeur du coefficient $\mu$ qui a été choisie ici égale à 0,985. Les deux coefficients du filtre 46 sont ici, en valeurs décimales $\alpha_1$ = 0,7944 et $\alpha_2$ = 0,9702. Ces coefficients sont en pratique codés en numérique à 12 bits.

La caractéristique A de l'écrêteur est choisie de manière telle que le filtre 46, compte tenu de son gain, ne sature pas (reste d'amplitude inférieure à 1) pour une réception de signal d'alarme pur. On a choisi pour A la valeur décimale A = 0,009 16.

La sortie du filtre 46 attaque un circuit 48 (ABS) de mesure de valeurs absolues attaquant lui-même un filtre passe-bas du premier ordre 50. L'ensemble circuit 48, filtre 50, mesure l'énergie à la sortie du filtre à bande étroite 46 ou plus précisément l'amplitude du signal V que l'on assimilera à cette énergie. On a choisi pour le filtre 50 des coefficients $\beta_1$ = $\beta_2$ = 0,98.

En pratique, le récepteur de tonalité ne considérera qu'un signal d'alarme aura été reçu que si l'énergie V dépasse un seuil de détection Vo entre 0,24 et 0,30 (en valeur décimale) durant au moins 100 intervalles de symboles consécutifs ou autrement dit durant 100 instants de signalisation consécutifs, instants auxquels les mesures d'énergie sont effectuées.

Le dispositif de la figure 2 ne peut cependant être valablement utilisé lorsque des signaux d'alarme et de données sont reçus simultanément compte tenu du fait que le signal d'alarme peut être reçu avec un niveau très inférieur à celui du signal de données. Dans ce cas, les risques de non-détections d'alarmes seraient vraiment trop importants. D'où le grand intérêt du détecteur de tonalité perfectionné représenté sur la figure 3. Dans ce récepteur, les échantillons Xn sortant du convertisseur analogique numérique 42 sont envoyés dans un dispositif 45 avant d'être soumis à un dispositif semblable à celui de la figure 2. Le dispositif 45 est constitué par un premier filtre numérique passe-bande du second ordre centré sur la fréquence du signal d'alarme soit F = 325 Hz. Ce premier filtre comporte deux cellules à retard 51 et 52, trois multiplicateurs multipliant par des coefficients fixes $\delta_0$, $\delta_1$ et $\delta_2$ et un additionneur 54. La boucle de réaction de ce premier filtre passe-bande est en outre équipée d'un circuit limiteur 56 (L). Si l'on désigne par Zn les échantillons entrant dans le limiteur 56, celui-ci est conçu de manière à fournir à sa sortie, des termes ayant une valeur numérique Yn obéissant aux relations :

$$Yn = Zn \quad \text{si} \qquad -B \leqslant Zn \leqslant B$$
$$Yn = B \quad \text{si} \qquad Zn > B$$
$$Yn = -B \quad \text{si} \qquad Zn < -B$$

Le seuil B est codé à 16 bits. En choisissant B = 0,281, le gain d'entrée $\delta_0$ = 0,267 et les gains de boucles $\delta_1$ = 0,749 et $\delta_2$ = 0,92188, on évite les perturbations de détection du signal d'alarme en régime de saturation du convertisseur analogue-numérique 42.

Le dispositif 45 comporte en outre une boucle de réaction d'entrée ayant un gain $\gamma$ et alimentant un additionneur 58 placé en sortie du premier filtre, donc à l'entrée de l'écrêteur 44 (HL). La présence de cette boucle permet d'éviter que certaines séquences de données ou autre bruit ne simulent la présente d'un signal à 325 Hz et donc n'entraîne une fausse détection de signal d'alarme.

Le choix de la valeur du coefficient $\gamma$ est critique si l'on veut pouvoir détecter des signaux d'alarme dans une large gamme d'amplitudes relatives par rapport aux données. On a choisi $\gamma$ tel que :

$$En^2 \geqslant \gamma^2 \, E \, Xn^2$$

Lorsque le signal reçu est un signal de données additionné éventuellement de bruit, celui-ci étant d'un niveau très inférieur à celui des données, c'est-à-dire ne comportant pas de signal d'alarme

où « E » représente l'espérance mathématique ou moyenne arithmétique des termes qui suivent, soit Zn ou Xn et
$\geqslant$ signifie « supérieur ou peu différent de »

Ce coefficient $\gamma$ décroît artificiellement le rapport signal d'alarme/bruit à l'entrée de l'écrêteur 44. Si un signal d'alarme de faible niveau est simulé à la sortie du premier filtre passe-bande, son énergie est maintenue suffisamment faible par rapport à celle du signal à largeur bande $\gamma$ Xn pour ne pas provoquer de détection d'alarme.

La sortie de l'additionneur 58 attaque un dispositif semblable à celui de la figure 2 donc comportant un écrêteur 44, un (second) filtre numérique passe-bande centré sur la fréquence du signal d'alarme et un dispositif 48-50 mesurant l'énergie du signal fourni par ledit second filtre numérique.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention. C'est ainsi que bien que l'on ait décrit le récepteur de l'invention comme étant destiné à détecter un signal d'alarme, il est évident que ce même récepteur peut être utilisé pour détecter la présence d'une tonalité assurant une fonction autre que l'alarme.

**Revendications**

1. Dispositif récepteur d'un signal de fréquence (tonalité) donné associé à un système de transmission de données numériques et chargé de déceler la présence de ladite tonalité au sein du signal reçu, ladite tonalité étant de fréquence située en dehors du spectre du signal de données, ledit récepteur de signal de tonalité comportant un convertisseur analogique-numérique échantillonnant le signal reçu et convertissant les échantillons Xn en numérique et étant caractérisé en ce qu'il comporte :
un premier filtre numérique passe-bande (51, 52, 54, $\delta_v$, $\delta_1$, $\delta_2$) centré sur la fréquence du signal de tonalité et relié au convertisseur analogique-numérique (42) ;
un dispositif limiteur (56) relié audit premier filtre passe-bande ;

une boucle de réaction d'entrée de gain γ reliée audit convertisseur analogique-numérique ;

un additionneur (58) dont les entrées sont reliées aux sorties dudit dispositif limiteur et de ladite boucle de réaction ;

un circuit écrêteur (44) relié à la sortie dudit additionneur ;

un second filtre numérique (46) relié audit circuit écrêteur ; et,

des moyens (48, 50) pour mesurer l'énergie V du signal fourni par ledit second filtre numérique.

2. Dispositif récepteur de tonalité selon la revendication 1 caractérisé en outre en ce que ledit premier filtre numérique passe-bande est de type récursif donc pourvu d'une boucle de réaction (51, 52, $\delta_1$, $\delta_2$), reliée à la sortie du dispositif limiteur.

3. Dispositif récepteur de tonalité selon la revendication 2 caractérisé en ce que ledit circuit limiteur (56) recevant des échantillons Zn fournit des termes Yn de valeur numérique obéissant à la relation :

| | | |
|---|---|---|
| Yn = Zn | si | $-B < Zn < B$ |
| Yn = B | si | $Zn > B$ |
| Yn = $-B$ | si | $Zn < -B$ |

où B est un seuil de valeur prédéterminée.

4. Dispositif récepteur de tonalité selon l'une des revendications 1 à 3 caractérisé en outre en ce que le gain γ est choisi de manière telle qu'il vérifie la relation :

$$E\, Zn^2 > \gamma^2\, E\, Xn^2$$

lors de la réception d'un signal de données seul, ou éventuellement additionné de bruit
où « E » représente l'espérance mathématique.

5. Dispositif récepteur de tonalité selon la revendication 4 caractérisé en ce que la sortie dudit circuit écrêteur (44) fournit une valeur numérique appliqué à l'entrée dudit écrêteur est positive ou nulle, et à $-A$ lorsque ledit échantillon est négatif.

6. Dispositif récepteur de tonalité selon la revendication 5 caractérisé en ce que la tonalité est considérée reçue lorsque l'énergie V est supérieure à un seuil donné durant un nombre prédéterminé de mesures consécutives.

7. Dispositif récepteur selon la revendication 6 caractérisé en ce que ladite tonalité représente une alarme envoyée par l'un des éléments (21-1, 21-2 ou 21-3) du système de transmission de données à un autre élément dit principal (20).

8. Dispositif récepteur selon la revendication 7 caractérisé en ce que l'élément transmettant le signal d'alarme ainsi que l'élément dit principal sont des modems.

9. Dispositif récepteur selon la revendication 8 caractérisé en ce que lesdits modems utilisent les principes de modulation de type DSB-QC.

**Claims**

1. A tone receiver associated with a digital data transmission system for detecting a tone of given frequency in the received signal, said frequency lying outside the data signal spectrum, said receiver comprising an analog-to-digital converter that samples the received signal and converts the Xn samples to digital form and being characterized in that it includes :

a first digital bandpass filter (51, 52, 54, $\delta_v$, $\delta_1$, $\delta_2$) centered on the frequency of said tone and connected to the analog-to-digital converter (42) ;

a limiter (56) connected to said first digital passband filter ;

an input feedback loop of gain γ connected to said analog-to-digital converter ;

an adder (58) having its inputs connected to the outputs of said limiter and said feedback loop ;

a hard limiter (44) connected to the output of said adder ;

a second digital filter (46) connected to said amplitude limiter ; and

means (48, 50) for measuring the energy V of the signal supplied by said second digital filter.

2. A tone receiver according to claim 1, further characterized in that said first digital bandpass filter is a recursive type of filter and therefore includes a feedback loop (51, 52, $\delta_1$, $\delta_2$) connected to the output of said limiter.

3. A tone receiver according to claim 2, characterized in that said limiter (56) receiving Zn samples supplies Yn terms of digital value in accordance with the relation :

| | | |
|---|---|---|
| Yn = Zn | if | $-B < Zn < B$ |
| Yn = B | if | $Zn > B$ |
| Yn = $-B$ | if | $Zn < -B$ |

where B is a threshold having a predetermined value.

4. A tone receiver according to any one of claims 1 to 3, further characterized in that gain $\gamma$ is selected so as to verify the relation

$$E\ Zn^2 > \gamma^2\ E\ Xn^2$$

upon receipt of a data signal, whether or not the data signal includes noise,
where E is the mathematical expectation.

5. A tone receiver according to claim 4, characterized in that the output of said hard limiter (44) provides a digital value equal to $+A$ when the amplitude of the digital sample applied to the input of the hard limiter is positive or zero, and to $-A$ when it is negative.

6. A tone receiver according to claim 5, characterized in that the tone is considered to be received when energy V exceeds a given threshold during a predetermined number of consecutive measurements.

7. A tone receiver according to claim 6, characterized in that said tone represents an alarm sent by one of the elements (21-1, 21-2 or 21-3) of the data transmission system to a so-called main element (20).

8. A tone receiver according to claim 7, characterized in that both the element that sends the alarm signal and the main element are modems.

9. A tone receiver according to claim 8, characterized in that said modems use a DSB-QC type of modulation.

**Patentansprüche**

1. Empfangsvorrichtung für ein Signal einer bestimmten Frequenz (Hörwarnung), das mit einem System zur Übertragung digitaler Daten verbunden ist und zur Aufgabe hat, die Gegenwart der genannten Höranzeige innerhalb des empfangenen Signals festzustellen, wobei die genannte Höranzeige einer ausserhalb des Datensignalspektrums liegenden Frequenz entspricht, der genannte Empfänger der Hörwarnung einen Analog-Digital-Konverter umfasst, um das empfangene Signal abzutasten und die Xn-Muster in digitale Werte umzuwandeln, und dadurch gekennzeichnet ist, dass er folgende Komponenten beinhaltet :

einen ersten digitalen Bandpassfilter (51, 52, 54, $\delta_v$, $\delta_1$, $\delta_2$), der auf die Frequenz des Hörwarnsignals zentriert und mit dem Analog-Digital-Konverter (42) verbunden ist ;
eine mit dem genannten ersten Bandpassfilter verbundene Begrenzungsvorrichtung (56) ;
eine mit dem genannten Analog-Digital-Konverter verbundene Eingangs-Rückkopplungsschleife mit der Verstärkung $\gamma$,
eine Addiervorrichtung (58), deren Eingänge mit den Ausgängen der genannten Begrenzungsvorrichtung und der genannten Rückklopplungsschleife verbunden sind ;
eine mit dem Ausgang der genannten Addiervorrichtung verbundene Begrenzerschaltung (44) ;
einen zweiten, mit der genannten Begrenzerschaltung verbundenen digitalen Filter (46), und
Mittel (48, 50), um die Energie V des vom genannten zweiten digitalen Filters gelieferten Signals zu messen.

2. Empfangsvorrichtung für eine Hörwarnung nach Anspruch 1, zusätzlich dazu dadurch gekennzeichnet, dass der genannte erste digitale Bandpassfilter dem rekursiven Typ entspricht, also eine Rückkopplungsschleife (51, 52, $\delta_1$, $\delta_2$) umfasst, die mit dem Ausgang der Begrenzungsvorrichtung verbunden ist.

3. Empfangsvorrichtung für eine Hörwarnung nach Anspruch 2, dadurch gekennzeichnet, dass die genannte Begrenzungsvorrichtung (56), die die Zn-Muster empfängt, ebenfalls Yn-Glieder mit digitalem Wert liefert, die folgender Beziehung entsprechen :

| | | | | |
|---|---|---|---|---|
| $Yn =$ | $Zn$ | wenn | $-B < Zn <$ | $B$ |
| $Yn =$ | $B$ | wenn | $Zn >$ | $B$ |
| $Yn =-B$ | | wenn | $Zn < -B,$ | |

wobei B ein vorbestimmter Schwellenwert ist.

4. Empfangsvorrichtung für eine Hörwarnung nach einem der Ansprüche 1 bis 3, zusätzlich dazu dadurch gekennzeichnet, dass die Verstärkung $\gamma$ derart gewählt wird, dass die Beziehung :

$$E\ Zn^2 > \gamma^2\ E\ Xn^2$$

bei Empfang eines Datensignals allein oder eventuell mit Zusatz eines Rauschtons erfüllt wird, wobei « E » die mathematische Wahrscheinlichkeit darstellt.

5. Empfangsvorrichtung für eine Hörwarnung nach Anspruch 4, dadurch gekennzeichnet, dass der Ausgang der genannten Begrenzerschaltung (44) einen digitale Wert erstellt, der, am Eingang der genannten Begrenzerschaltung angelegt, positiv oder Null ist, und gleich $-A$, wenn das genannte Muster negativ ist.

6. Empfangsvorrichtung für eine Hörwarnung nach Anspruch 5, dadurch gekennzeichnet, dass die

**0 097 753**

Hörwarnung als empfangen angesehen wird, wenn die Energie V während einer vorbestimmten Anzahl von aufeinanderfolgenden Messungen einen bestimmten Schwellenwert überschreitet.

7. Empfangsvorrichtung nach Anspruch 6, dadurch gekennzeichnet, dass die genannte Hörwarnung einen Alarm darstellt, der von einem der Elemente (21-1, 21-2 oder 21-3) des Datenübermittlungssystems einem anderen sogenannten Hauptelement (20) übertragen wird.

8. Empfangsvorrichtung nach Anspruch 7, dadurch gekennzeichnet, dass das Element, welches das Alarmsignal überträgt, und auch das sogenannte Hauptelement Modems sind.

9. Empfangsvorrichtung nach Anspruch 8, dadurch gekennzeichnet, dass die genannten Modems Modulationsprinzipien vom Typ DSB-QC verwenden.

# FIG. 1

FIG. 2

FIG. 3